(19) Europäisches Patentamt

European Patent Office

Office européen des brevets

(11) **EP 1 365 335 A1**

(12) **DEMANDE DE BREVET EUROPEEN**

(43) Date de publication:
**26.11.2003 Bulletin 2003/48**

(51) Int Cl.$^7$: **G06F 17/60**

(21) Numéro de dépôt: **02011140.7**

(22) Date de dépôt: **21.05.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Newtrade Solutions SA**
**1196 Gland (CH)**

(72) Inventeur: **Seilern, Peter**
**1936 Verbier (CH)**

(74) Mandataire: **Wenger, Joel-Théophile**
**Leman Consulting S.A.**
**62 route de Clementy**
**1260 Nyon (CH)**

(54) **Méthode de traitement de transactions boursières par voie électronique**

(57) La présente invention se propose de mettre à disposition des utilisateurs un outil de transactions boursières en-ligne qui permette de tenir compte de l'évolution à court terme du marché boursier.

La méthode de l'invention consiste donc à surveiller l'évolution de deux titres, l'un en vue de la vente S1 et l'autre en vue de l'achat S2. Lorsque la valeur du titre à la vente évolue positivement par rapport au titre à l'achat, dans une proportion dépassant un seuil donné (S), la vente du premier titre et l'achat du second titre est simultanément effectuée.

Fig. 2

## Description

La présente demande concerne le domaine des transactions boursières, en particulier des transactions faites par voie électronique.

Depuis la fin des années 1990, les possibilités d'effectuer des transactions boursières par voie électronique ont fait exploser le nombre de transactions journalières. En mars 2001, plus de 13 millions d'utilisateurs effectuant des ordres d'achats ou de ventes par Internet étaient recensés.

Ce succès est dû à l'accès aux informations boursières en-ligne et à la facilité de placer des ordres. Un autre aspect important de cet engouement est la baisse continuelle des commissions sur les opérations. Un compte ouvert auprès d'un fournisseur de courtage en-ligne suffit à transformer un père de famille en un habitué des cours de la bourse.

On a vu même certains quitter leur travail pour se consacrer uniquement à cette activité avec tous les risques que cela comporte.

Dans l'analyse de l'évolution d'un titre, on considère généralement trois scenarii. Le court terme, le moyen terme et le long terme.

On considère qu'un titre évolue selon la santé de l'entreprise concernée pour ce qui est du long terme. Pour ce qui concerne le moyen terme, le cours d'un titre est généralement fonction de l'évolution globale de la bourse. Quant au court terme (quelques jours à quelques semaines), son évolution est imprévisible et dépend d'un grand nombre de facteurs tels que des décisions particulières d'achat ou de vente, des recherches boursières, l'économie, la situation politique, des rumeurs, de l'intérêt pour un secteur etc.

En regardant de plus près la cotation d'un titre, on s'aperçoit qu'il comporte de nombreuses oscillations aléatoires souvent de quelques pour-cent variant en fonction de la volatilité d'un titre.

Dans le cadre de cette invention, nous nous limiterons au traitement des titres dans une optique à court terme.

Tous les fournisseurs d'accès à une plate-forme de transaction tentent de la rendre la plus attractive possible et proposent des outils d'aide aux opérations. Ainsi il est bien connu des systèmes qui permettent de sélectionner un titre et de définir des limites déclenchant des ordres.

Si par exemple j'ai acheté un titre à 25 \$, je vais placer un ordre limite de vente à 28 \$. Si ce titre atteint cette limite, la vente de ce titre me rapportera 3 \$ par titre. Une fois ces données validées et transmises à la plate-forme de courtage, il ne reste plus qu'à attendre le moment où mon titre pourrait atteindre la limite fixée.

Il se peut que cet ordre de vente intervienne dans une conjoncture de hausse du marché et bien que me rapportant 3\$, le titre aurait pu se vendre 32 \$ quelques jours plus tard.

Selon une autre méthode de courtage en ligne décrite dans le document WO 0051043, il est possible de traiter d'une manière automatique un grand nombre de titres. Les conditions sont introduites d'une manière générale et s'appliquent sur plusieurs transactions.

Les méthodes connues de l'état de la technique telles que celle décrites précédemment, bien que facilitant grandement les étapes nécessaires pour une transaction ont toutes le point commun d'être liées à un titre et de ne pas tenir compte de l'environnement conjoncturel au moment de l'achat ou la vente.

La présente invention se propose de mettre à disposition des utilisateurs un outil qui permette de tenir compte de l'évolution à court terme de la cotation des titres en question.

Ce but est atteint par une méthode de négoce de titres par voie électronique, chaque titre étant défini par son symbole (S) et sa cotation (P1, P2, P3, P4), d'un premier titre (S1) à vendre à une première cotation initiale (P1) dont on définit une première quantité (N1) représentant une première valeur globale initiale (P1*N1) à un point de référence, caractérisé en qu'elle comporte les étapes suivantes:

a) définir un second titre (S2) à acquérir dont on définit une seconde quantité (N2) à une seconde cotation initiale (P2) représentant une seconde valeur globale initiale (P2*N2) audit point de référence,

b) définir une condition de négoce (RS) représentant un gain résultant de la vente de la première quantité (N1) du premier titre (S1) et de l'achat de la seconde quantité (N2) du second titre (S2) après une évolution dans le temps des cotations du premier et du second titre permettant de dégager ce gain (RS), étant entendu que ce gain serait nul si la transaction était réalisée au point de référence,

c) surveiller la cotation courante (P3) du premier titre et la cotation courante (P4) du second titre,

d) calculer le gain (AS) fictif résultant de la vente de la première quantité (N1) à la cotation courante (P3) du premier titre (S1) et de l'achat de la seconde quantité (N2) à la cotation courante (P4) du second titre (S2),

e) si cette ce gain fictif (AS) est égal ou excède la valeur de condition de négoce (RS), vérifier si tout ou partie de la quantité (N1) du premier titre est demandée par le marché boursier (bid), et si tout ou partie de la seconde quantité (N2) du second titre est disponible sur le marché boursier (ask), dans l'affirmative,

f) vendre simultanément tout ou partie de la première quantité (N1) du premier titre (S1) et acheter tout ou partie de la seconde quantité (N2) du second titre (S2),

g) dans la négative, reprendre les étapes c) à e).

Par "titre" on entend tous types de valeurs qui sont négociées sur le marché boursier électronique, à savoir les actions, les obligations, les options, les produits dérivés, les warrants, les fonds de placement, les devises etc.

La méthode de l'invention consiste donc à surveiller l'évolution de deux titres, l'un en vue de la vente S1 et l'autre en vue de l'achat S2. Cette surveillance peut s'effectuer de différentes manières, soit sur la valeur unitaire de chaque titre, soit sur la valeur globale des titres considérés, soit en pour-cent par rapport au point de référence.

Au point de référence, on considère une valeur fictive qui consisterait à vendre ses titres S1 et acheter des titres S2 selon les quantités définies N1 et N2. Cette transaction peut ne laisser aucune valeur restante car les deux valeurs globales initiales sont identiques. Par contre, il se peut que les deux valeurs globales diffèrent et qu'il y ait une différence initiale qui peut être positive ou négative. Néanmoins, on considère que cette différence ne constitue pas un gain puisqu'il s'agit des conditions au point de référence.

La condition de négoce, à l'origine est définie selon la formule suivante:

$$RS = S * (N1*P1 + N2*P2) / 2$$

où S est la performance désirée exprimée en pour-cent et RS le gain désiré en valeur absolue. A ce moment, on utilise la valeur moyenne entre la valeur globale à la vente et la valeur globale à l'achat.

Pour chaque titre, il existe un grand nombre de paramètres exprimant sa cotation à un moment donné. Pour ce qui est de la valeur, il est possible d'obtenir la valeur de la dernière transaction, le volume moyen journalier, la valeur proposée à l'achat ("bid price") et la valeur proposée à la vente ("ask price").

La présente invention ne se limite pas à n'utiliser que l'une ou l'autre de ces valeurs. Le choix de la valeur qui est choisie pour effectuer les calculs de gain est dépendant de l'implémentation de l'invention et de la précision que l'on souhaite obtenir.

Selon le mode préféré de l'invention, c'est plus particulièrement la valeur proposée à l'achat ("bid price") et la valeur proposée à la vente ("ask price") qui nous concernent lors de l'évaluation de la valeur courante d'un titre. La valeur courante proposée à l'achat (bid price) sera référencée P3 et la valeur courante proposée à la vente (ask price) sera référencée P4 pour la suite de l'exposé. Pour le calcul de la valeur initiale des titres en question (P1 et P2), il est possible d'utiliser la valeur de la dernière transaction sur ce titre ou la valeur courante proposée à l'achat (P1) et la valeur courante proposée à la vente (P2).

Lors de la transaction, le gain réel AS peut donc s'exprimer selon la formule suivante:

$$AS = (N1 * P3 - N2 * P4) - (N1 * P1 - N2 * P2)$$

Cette méthode présente de nombreux avantages. Après une double transaction, il reste un gain qui est proportionnel à la variation de l'évolution des deux titres considérés et la quantité intervenant dans la transaction.

Grâce à cette méthode, l'on tient compte de l'évolution des titres dans ses petites variations. En effet, des études ont démontré qu'une différence jusqu'à 2 à 3% entre deux titres connus avec les conditions annexes de disponibilité (ask) et de demande (bid), intervenait en général dans les premiers jours.

Un temps plus long sera nécessaire si l'on souhaite fixer des différences plus élevées, ce temps sera également dépendant de la volatilité des marchés boursiers.

Le fait de vérifier simultanément les deux conditions, soit la condition de vente et la condition d'achat permet de ne jamais se retrouver dans une situation délicate. En effet, dans un schéma classique, on vend premièrement ses titres puis l'on cherche à acheter d'autres titres. Le temps entre ces deux actions ainsi que la volatilité des marchés fait que les conditions favorables peuvent rapidement s'inverser et l'utilisateur devoir attendre longtemps avant de voir la cotation de son titre visé remonter au niveau souhaité.

Il est dès lors très difficile sans la méthode de l'invention de tirer avantage des rapides variations aléatoires des titres.

Pour calculer une valeur relative, il est indispensable de disposer d'une référence. Selon une première forme de réalisation, la valeur initiale du premier et second titre est saisie lors de l'introduction des données sur la plate-forme du fournisseur de cotations en ligne.

Autour de cette méthode, de nombreuses aides à l'utilisateur sont prévus qui seront décrites plus avant en regard de la description détaillée qui va suivre et qui se réfèrent aux figures, qui sont données à titre d'exemple nullement limitatif, à savoir:

- la figure 1 illustre la cotation de deux titres connus,

- la figure 2 illustre la cotation comparée de deux titres,

- la figure 3 illustre un masque de saisie des données selon un mode faisant intervenir un titre et un indice,

- la figure 4 illustre l'évolution d'un titre par rapport à un indice

- la figure 5 illustre une combinaison du mode à deux titres et un indice.

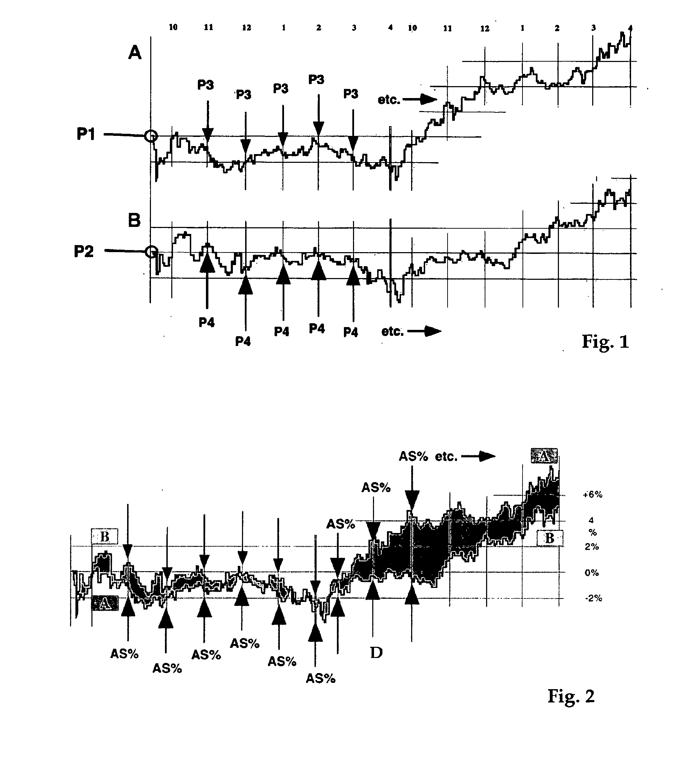

Sur la figure 1 est représenté la cotation d'un premier titre A et un second titre B sur une journée. La valeur de chacun de ces titres peut être fort différente. On observe qu'au cours du temps, les variations sont rapides et aléatoires. Sur cet exemple, les points P3 représentent les instants où une lecture aux données électroniques du titre A sont effectués. La valeur P3 représente donc la valeur instantanée de ce titre. De la même manière, le points P4 représentent les instants où une lecture aux données électroniques du titre B sont effectués. Ces valeurs vont donc servir à déterminer la valeur globale de chaque titre grâce à la quantité déterminée par l'utilisateur de chaque titre.

Pour bien comprendre le fonctionnement du mécanisme de surveillance des deux titres A et B, la figure 2 illustre les variations relatives entre les deux titres.

Selon notre exemple, l'on souhaite vendre les titres A pour acheter les titres B. Les points AS représentent les instants où le gain potentiel est calculé sur la base des deux valeurs instantanées P3 et P4 et des quantités respectives N1 et N2. Selon cet exemple, le gain AS est calculé toutes les heures.

On peut constater que l'évolution relative des deux courbes présente un point de croisement. La tendance où le titre B faisait mieux que le titre A s'inverse et c'est le titre A qui a une meilleure performance que le titre B.

Lorsque la valeur AS est égale ou plus grande que la condition de négoce RS tel qu'illustré au point D, la double transaction peut s'effectuer pour autant que les autres conditions soient remplies, à savoir les titres A sont demandés par le marché et les titres B sont disponibles sur le marché.

Pour la saisie des données par l'utilisateur, ce dernier va introduire la définition du titre que l'on souhaite vendre S1. Ce titre est généralement identifié par le symbole boursier. Lorsque le titre est choisi, la quantité de titres N1 doit être également déterminée. Sur la base de ces deux informations, la valeur de vente est ainsi calculée selon la cotation du jour P1.

De la même manière, les données pour le titre à acheter S2 sont à définir par l'utilisateur par son symbole boursier, la quantité N2 visé par cet achat et la valeur globale de l'achat est calculée et affichée dans le champ (N2*P2) selon la cotation du jour P2.

Il reste à définir la condition de négoce S pour que la double transaction s'effectue. Selon un mode de réalisation, cette condition est définie en pour-cent et varie de 0.5 à 10%, voire même au-delà. Une fois ces valeurs introduites, le programme peut calculer le gain supposé RS résultant de la vente du titre S1 et de l'achat de titre S2 après que la condition de négoce soit atteinte. Cette valeur est affichée à l'écran.

Il est certain que de nombreuses erreurs peuvent être introduites par l'utilisateur et c'est pourquoi le programme effectue certaines vérifications.

- contrôle concernant la dénomination du titre (S1, S2). En effet, il est important que le symbole soit correct et existe dans la liste des symboles boursiers,

- contrôle concernant la disponibilité du titre à vendre dans le portefeuille du donneur d'ordre. La quantité définie à la vente est également vérifiée afin d'éviter d'introduire des conditions impossibles à réaliser,

- contrôle concernant la comparaison des deux valeurs globales afin que l'échange d'un titre par un autre conserve une valeur similaire. Si ces deux valeurs diffèrent grandement, un avis est affiché à l'écran avertissant l'utilisateur. Une quantité différente est alors proposée à l'utilisateur qui corresponde à la valeur de la vente.

- contrôle concernant le critère de performance supposé S. Il est vérifié si le critère de performance S est dans des limites acceptables. En effet, si l'utilisateur décide d'un taux de 100%, il est utile de l'avertir que cela risque de ne jamais arriver.

Ces vérifications sous-entendent que des données récentes des titres soient accessibles par le programme de saisie des ordres. En général, l'opération se déroule en deux temps. La première étape consiste à introduire les valeurs telles que les symboles boursiers, la quantité et la performance.

La deuxième étape résulte de la vérification par le programme des données introduites et retourne les valeurs globales de transaction (N1*P1 et N2*P2) et la valeur supposée du gain RS.

Il est possible, selon une variante de l'invention, de ne déterminer que les conditions de vente, soit le titre et la quantité, ainsi que le titre à acquérir et la performance. Le programme détermine la quantité à acheter pour que la valeur globale des deux transactions soit environ équivalente.

L'utilisateur envoie son ordre et reçoit en retour l'image complète de la transaction pour vérification et confirmation.

Lorsque la transaction est validée par l'utilisateur, cette dernière est stockée dans la base de données de l'opérateur et la surveillance commence.

Il se peut que les conditions en terme de performance soient réalisées mais que les quantités offertes et demandées des titres ne soient pas disponibles soit pour l'un des titres visés, soit pour les deux.

Dans une forme de l'invention, il est alors possible de fractionner la transaction en maintenant une valeur achat et vente équivalente. Si la condition initiale était de vendre N1 titres A, par exemple 1500 titres et d'acheter N2 titres B, par exemple 1000 titres, il est possible que lorsque seulement une partie N1' de cette quantité est disponible, par exemple 600 titres B, la transaction va s'effectuer sur la vente de N1' titres A (900 titres) et l'achat de N2' titres B (600 titres).

Suite à cette transaction, la surveillance des critères continue dans le but d'effectuer le solde de cet ordre, à savoir vendre 600 titres A et acheter 400 titres B.

Dans la pratique, si seulement 10 titres B étaient disponibles, on bloquera également la transaction grâce à des limites pour ne pas effectuer des transactions inutilement, par exemple par la définition d'un pourcentage minimum de la quantité visée. SI un tel pourcentage était fixé à 30%, selon notre exemple, il faudrait qu'il y ait au minimum 450 titres A et 300 titres B disponibles pour qu'une transaction soit effectuée.

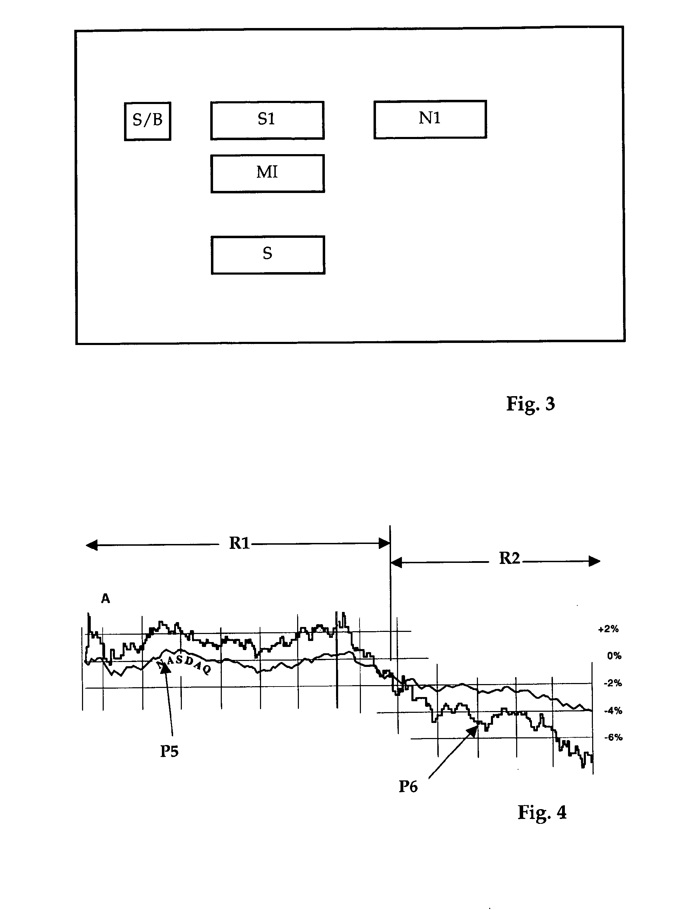

Sur la figure 3, on ne considère plus qu'un titre que l'on souhaite acheter ou vendre. Contrairement aux systèmes connus qui utilisent des limites hautes et basses pour déclencher l'ordre, la solution de l'invention propose de comparer l'évolution d'un titre avec l'évolution d'un indice de marché.

Dans le champ S1, l'on saisi le titre à vendre ou à acheter. La fonction achat ou vente est définie dans le champ S/B. L'utilisateur précise la quantité de titres à négocier dans le champ N1 et l'indice de référence pour ce titre dans le champ MI.

Le champ S permet de déterminer la différence de performance entre le titre considéré et l'indice. Par exemple dans la région R1, le titre fait mieux que l'indice de référence MI. Au point P5, la condition de vente d'un titre pour autant que l'indice soit inférieur à 2%, est atteinte. Si un ordre conditionnel de vente avait été introduit, il serait exécuté à ce moment (si bien sûr le marché est preneur de ces titres).

Inversement, dans la région R2, le titre fait moins bien que l'indice de référence MI. Au point P6, la condition d'achat d'un titre pour autant que l'indice soit supérieur à 2%, est atteinte. Si un ordre conditionnel d'achat avait été introduit, il serait exécuté à ce moment (si bien sûr le marché est vendeur de ces titres).

L'avantage est certain par rapport à un mécanisme de limite absolue. Un ordre de vente ne sera pas déclenché si le marché est globalement en évolution et que cette évolution suive celle du titre considéré. Ce procédé permet de se concentrer sur l'évolution particulière d'un titre par rapport au mouvement général de la bourse. Si un titre monte parallèlement à l'indice, le vendre à ce moment n'est pas indiqué. Pour qu'il devienne attractif à la vente, le titre doit faire mieux que l'indice de référence.

Les vérifications usuelles telles que décrites plus haut peuvent être également effectuées dans ce cas de figure. Un contrôle sur l'existence de l'indice de marché sera effectué afin d'éviter toute erreur de saisie.

Une sécurité supplémentaire est proposée en option à l'utilisateur par la définition d'une limite du prix d'achat ou de vente. En effet, en cas de forte variation de la bourse, il est possible de définir une limite soit supérieure en cas d'achat ou soit inférieure en cas de vente. Si ces limites sont dépassées, la transaction est bloquée.

Selon la première variante de l'invention mettant en oeuvre deux titres, lorsque le titre visé par l'achat voit sa valeur baisser, la transaction est déclenchée et l'échange de titres peut de faire. Il se peut que le titre visé soit dans une tendance baissière anormale et sa valeur vouée à une forte diminution dans les jours qui viennent. Dans ce cas l'achat d'un tel titre peut se révéler inadéquate à moyen terme.

C'est pourquoi il est possible d'introduire une troisième composante qui est l'indice du marché concerné par ce titre. En effet, si le titre à acheter est dans une phase négative par rapport à cet indice, la transaction n'est pas effectuée.

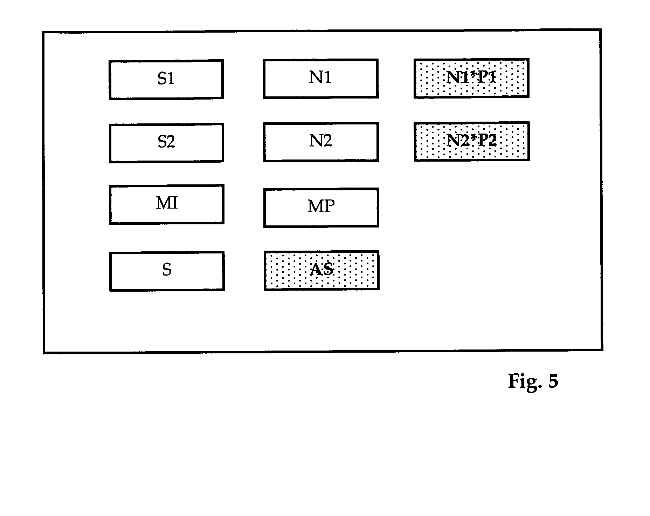

Cette configuration est illustrée à la figure 5 où en plus des titres et quantités de titres à la vente et à l'achat ainsi que la performance visée, deux nouveaux champs sont proposés à l'utilisateur. Le premier champ MI définit l'indice du marché à vérifier (par exemple NASDAQ) en cas d'achat d'un titre et le champ MP la différence maximale tolérée entre l'évolution de cet indice et le titre à acheter. Avant de valider un achat de titre, il est vérifié que son évolution par rapport au point de référence n'est pas plus basse que la valeur MP définie par l'utilisateur. Ce nouveau paramètre évite d'acheter un titre qui serait en train de chuter par suite d'annonce de résultats loin des attentes des investisseurs par exemple. Si la performance S est définie à 2% et que la différence maximale MP est définie à 2%, la transaction ne pourra s'effectuer que lorsque le titre à vendre S1 est au moins égal à l'indice MI; le titre à l'achat S2 quant à lui est à -2% par rapport au titre à vendre S1 (condition de performance) et également au maximum à -2% de l'indice.

Cette configuration où performance S = limite de l'indice MP oblige le titre à la vente d'être au moins aussi bien placé que l'indice du marché.

De même que cette limite est appliquée au titre à acheter, il est possible de l'appliquer au titre à la vente, dans le but de bloquer une transaction d'achat si le titre venait à monter des performances particulièrement bonnes. Cette fois, c'est une condition inverse, c'est-à-dire que l'ordre de vente est bloqué si l'évolution du titre à la vente dépasse d'un certain pourcentage l'indice de référence.

D'autres variantes de réalisation peuvent être prévues dans le cadre de cette invention. Ainsi il peut être successivement placé un grand nombre d'ordres faisant intervenir des titres à la vente et de titre à l'achat. Dans un seul masque de saisie, il est introduit le titre à vendre, la quantité, le titre à acheter, la quantité ainsi que la performance visée.

Une autre variante permet une fonction OU sur le titre à acheter. Un premier titre est sélectionné pour la vente et deux ou plus sont sélectionnés pour l'achat. La surveillance se fait entre le premier titre et le second, ainsi qu'entre le premier titre et le troisième, et ainsi de suite pour tous les titres. Lorsque que le l'une ou l'autre des conditions de performance demandée est remplie, la transaction est générée et les autres ordres sont annulés.

Selon une autre variante, il est possible de fonctionner en boucle c'est-à-dire que lorsqu'une transaction a été effectuée, elle est automatiquement réinitialisée avec l'inversion des titres à la vente et à l'achat. Ainsi, à chaque inversion de tendance, une transaction est déclenchée. On peut observer sur le diagramme de la figure 2, le point P1 où une première transaction est effectuée. Les 2% de différence entre le titre A et le titre B sont atteints. Avec le rechargement automatique de cet ordre combiné, une nouvelle transaction est déclenchée au point P2 après que la tendance positive du titre A se soit inversée par rapport au titre B. Dans ce type de mécanisme, le point de référence, initialement fixé lors du début de la surveillance de la première transaction, peut soit être conservé à ce point là pour la suite de la surveillance, soit être ré-initialisé au moment de la première transaction. Cette dernière solution revient à recommencer une nouvelle transaction avec inversion des titres à vendre et à acquérir.

Ce mécanisme peut être également appliqué sur une version à plus de deux titres. Au départ, on cherche à vendre ses titres A au profit de titres B ou C. Lorsque l'une ou l'autre condition est remplie, par exemple par rapport à C, on vend ses titres A pour acheter des titres C. A partir de ce point, c'est le titre C qui sera à vendre et à comparer avec la cotations des titres A et B. Dans la pratique, on cherchera a définir un ensemble de titres au comportement proche c'est-à-dire touchant au même domaine.

Pour des raisons de sécurité, il est possible de fixer une date limite de validité pour toutes les transactions décrites ci-dessus. En effet, il se peut que les conditions du marché ne permette pas de rencontrer les conditions optimales rapidement. L'utilisateur peut définir par exemple une semaine la durée d'attente de ces conditions. Il est possible que cette durée soit déterminée automatiquement par le système en tenant compte le pourcentage de gain désiré. Plus le pourcentage est élevé, plus la durée avant annulation sera longue. Après ce délai, l'ordre est supprimé de la base de données de l'opérateur de courtage. Un message avertit l'utilisateur de cette date limite, d'une part lors de la programmation et d'autre part, lors de l'échéance.

Dans une configuration faisant intervenir une pluralité de titres, par exemple pour le remaniement d'un portefeuille, il est possible de définir plusieurs titres à la vente avec leur quantité respective. Parallèlement, l'utilisateur définit plusieurs titres à acheter selon une répartition en pourcentage. Lors de l'initialisation d'un tel ordre, le programme calcule la valeur globale du portefeuille à la vente et, selon le pourcentage défini pour chaque nouveau titre, détermine la quantité respective.

L'indice de performance fixé par l'utilisateur intervient donc sur la somme des valeurs de chaque titre. La différence entre les titres à la vente et à l'achat est surveillée à intervalles réguliers. Lorsque la condition de négoce est atteinte, la vente simultanée de tous les titres du portefeuille est déclenchée et l'achat des titres visés est ordonnée.

D'autres opérations sont effectuées afin d'assurer la conservation des conditions de départ. Ainsi, si un dividende DA est versé aux titulaires du titre, ce dividende permet de calculer le nouveau critère de performance:

P1 :    valeur initiale du titre à la vente A

P3 :    valeur courante du titre A à la vente (valeur de proposition d'achat "bid price")

N1 :    quantité de titre A

P2 : valeur initiale du titre à l'achat

P4 : valeur courante du titre à l'achat (valeur de proposition de vente "ask price")

N2 : quantité de titre B

Premier cas, le titre à la vente à reçu un dividende DA. P3ex tient compte de la valeur du titre A après imputation du dividende.

$$AS = (N1 * (P3ex + DA)) - (N2 * P4) - (N1 * P1 - N2 * P2)$$

Second cas, le titre à l'achat a reçu un dividende DA. P4ex tient compte de la valeur du titre B après imputation du dividende

$$AS = (N1 * P3 - N2 * (P4ex + DA)) - (N1 * P1 - N2 * P2)$$

Dans le cas d'une division d'un titre, il est également nécessaire de recalculer les conditions de négoce. Le titre à la vente est divisé selon Spa parties. P3ex tient compte de la valeur après la division (splitting).

$$AS = ((N1 * P3ex * Spa) - (N2 * P4)) - (N1 * P1 - N2 * P2)$$

Division d'un titre. Le titre à l'achat est divisé selon Spa parties. P4ex tient compte de la valeur après la division (splitting).

$$AS = ((N1 * P3ex) - (N2 * P4ex * Spa)) - (N1 * P1 - N2 * P2)$$

**Revendications**

1. Méthode de négoce de titres par voie électronique, chaque titre étant défini par son symbole (S) et sa cotation (P1, P2, P3, P4), d'un premier titre (S1) à vendre à une première cotation initiale (P1) dont on définit une première quantité (N1) représentant une première valeur globale initiale (P1*N1) à un point de référence, **caractérisé en qu'**elle comporte les étapes suivantes:

   a) définir un second titre (S2) à acquérir dont on définit une seconde quantité (N2) à une seconde cotation initiale (P2) représentant une seconde valeur globale initiale (P2*N2) audit point de référence,
   b) définir une condition de négoce (RS) représentant un gain résultant de la vente de la première quantité (N1) du premier titre (S1) et de l'achat de la seconde quantité (N2) du second titre (S2) après une évolution dans le temps des cotations du premier et du second titre permettant de dégager ce gain, étant entendu que ce gain serait nul si la transaction était réalisée au point de référence,
   c) surveiller la cotation courante (P3) du premier titre et la cotation courante (P4) du second titre,
   d) calculer le gain (AS) fictif résultant de la vente de la première quantité (N1) à la cotation courante (P3) du premier titre (S1) et de l'achat de la seconde quantité (N2) à la cotation courante (P4) du second titre (S2),
   e) si cette ce gain fictif (AS) est égal ou excède la valeur de condition de négoce (RS), vérifier si tout ou partie de la quantité (N1) du premier titre est demandée par le marché boursier (bid), et si tout ou partie de la seconde quantité (N2) du second titre est disponible sur le marché boursier (ask), dans l'affirmative,
   f) vendre simultanément tout ou partie de la première quantité (N1) du premier titre (S1) et acheter tout ou partie de la seconde quantité (N2) du second titre (S2),
   g) dans la négative, reprendre les étapes c) à e).

2. Méthode selon la revendication 2, **caractérisée en ce que** lorsqu'une quantité inférieur (N1') à la quantité visée (N1) est demandée par le marché, ou une quantité inférieur (N2') à la quantité visée (N2) est disponible sur le marché, la double transaction de vente et d'achat est effectuée sur cette quantité disponible (N1' ou N2'), la quantité de l'autre titre étant ajustée pour respecter la proportion initiale entre la première quantité (N1) et la seconde quantité (N2).

**3.** Méthode selon les revendications 1 ou 2, **caractérisée en ce qu'**elle comprend les contrôles suivants:

- contrôle concernant la dénomination du symbole du titre (S1, S2),
- contrôle concernant la disponibilité du titre à vendre dans le portefeuille du donneur d'ordre,
- contrôle concernant la comparaison des deux valeurs globales afin que l'échange de la première quantité (N1) du premier titre (S1) par la seconde quantité (N2) du second titre (S2) conserve une valeur similaire,
- contrôle concernant le critère de performance souhaité S selon une plage de valeur prédéfinie.

**4.** Méthode selon les revendications 1 à 3, **caractérisée en ce qu'**elle comporte de plus, les étapes suivantes,

b') définir un indice de marché (MI) ainsi qu'un indice de sécurité (MP) représentant l'évolution de l'indice (MI) par rapport à la cotation du second titre (S2) selon un point de référence,

d') comparer l'évolution de la cotation du second titre (S2) avec l'évolution de l'indice (MI), et vérifier que la différence entre l'évolution de l'indice et l'évolution de la cotation du second titre soit inférieure à l'indice de sécurité (MP).

**5.** Méthode selon les revendications 1 à 4, **caractérisée en ce que** le second titre à acquérir (S2) est remplacé par une pluralité de titres (S2...Sn) à acquérir, chacun de ces titres étant défini par une quantité (N2...Nn) à une cotation initiale (P2...Pn) représentant une valeur globale initiale (P2*N2... Pn*Nn), et **en ce que** la surveillance des cotations, le calcul du gain fictif (AS) et les conditions de disponibilité de quantité sur le marché boursier (ask, bid) se font successivement entre le premier titre (S1) et chaque titre à acquérir (S2...Sn), et lorsque l'un des titres à acquérir remplit ces conditions, vendre simultanément tout ou partie de la première quantité (N1) du premier titre (S1) et acheter tout ou partie de la quantité (Nn) du second titre remplissant ces conditions.

**6.** Méthode selon l'une des revendications précédentes, **caractérisée en ce que**, lorsqu'une vente et un achat simultané a été effectué, l'on réinitialise la méthode dans laquelle le premier titre (S1) est maintenant surveillé en vue de son acquisition et le titre précédemment acquis (S2...Sn) est maintenant surveillé en vue de sa vente.

**7.** Méthode selon la revendication 6, **caractérisée en ce qu'**elle consiste à définir un nouveau point de référence correspondant au moment où la vente et l'achat a été simultanément effectuée.

**8.** Méthode de négoce de titres par voie électronique d'un premier titre (S1) à vendre ou à acheter dont on définit une première quantité (N1), **caractérisée en qu'**elle comporte les étapes suivantes:

a) définir un indice de marché (MI) ainsi qu'un indice de performance (S) représentant l'évolution de l'indice (MI) par rapport à la cotation du titre considéré (S1) selon un point de référence,
b) surveiller la cotation du titre (S1) et calculer l'évolution de sa cotation par rapport au point de référence,
c) comparer l'évolution du titre (S1) avec l'évolution de l'indice (MI),
d) si l'on souhaite acheter le titre (S1), vérifier que la différence entre l'évolution de l'indice et l'évolution de la cotation du titre soit supérieure à l'indice de performance (S), si l'on souhaite vendre le titre (S1), vérifier que la différence entre l'évolution de la cotation du titre et l'évolution de l'indice soit supérieure à l'indice de performance (S), dans l'affirmative,
e) acheter ou vendre le titre (S1) d'une première quantité (N1),
f) dans la négative, reprendre les étapes c) à f).

**9.** Méthode selon la revendication 8, **caractérisée en ce qu'**elle consiste à définir des limites absolues de la valeur du titre à vendre ou à acheter hors desquelles la transaction est bloquée.

Fig. 1

Fig. 2

**Fig. 3**

**Fig. 4**

| S1 | N1 | N1*P1 |
|---|---|---|
| S2 | N2 | N2*P2 |
| MI | MP | |
| S | AS | |

Fig. 5

**Office européen**

**des brevets**

**DECLARATION**

qui selon la règle 45 de la Convention sur le brevet
européen est considerée, aux fins de la procédure ultérieure,
comme le rapport de la recherche européenne

Numéro de la demande

EP 02 01 1140

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (Int.Cl.7) |
|---|---|
| Raison : | G06F17/60 |

Les revendications concernent un object
exclu de la brevetabilité selon l' Art.
52(2) et (3) CBE. Etant donné que les
revendications sont formulées de façon à
revendiquer de tels objets ou leur
réalisation technologique à l'aide de
caractéristiques triviales, l'examinateur
de recherche n'a pas pu définir de
problème technique dont la solution
pourrait éventuellement impliquer une
activité inventive. Par conséquent il
n'était pas possible d'effectuer une
recherche significative sur l'état de la
technique (Règle 45 CBE et Directives du
CBE, Chapitre VIII, 1-6).

L'attention du déposant est attirée sur le
fait que, suite à une déclaration
conformément à la Règle 45 CBE, une
recherche pourrait être effectuée pendant
la phase d'examen, à condition que les
problèmes ayant conduit à cette
déclaration de non-recherche ou de
recherche incomplète aient été résolus
(voir Directives OEB C-VI, 8.5).

---
-----

| Lieu de la recherche | Date | Examinateur |
|---|---|---|
| LA HAYE | 1 octobre 2002 | Pinheiro, T. |

EPO FORM 1504 (P04C38)